# EUROPEAN PATENT APPLICATION

(11) **EP 3 750 625 A1**
(43) Date of publication of application: **16.12.2020**
(21) Application number: 19750970.6
(22) Date of filing: 04.02.2019
(51) Int. Cl.: B01J 23/58, C01C 1/04, C01F 7/16

(54) **CONJUGATE, CATALYST AND METHOD FOR PRODUCING AMMONIA**

(30) Priority: 07.02.2018 JP 2018020548
(71) Applicant: Tokyo Institute of Technology, Tokyo 152-8550 (JP); Tsubame BHB Co., Ltd., Tokyo 104-0045 (JP)
(72) Inventor: HOSONO, Hideo, Tokyo 152-8550 (JP); KITANO, Masaaki, Tokyo 152-8550 (JP); YOKOYAMA, Toshiharu, Tokyo 152-8550 (JP); KAWAMURA, Shigeki, Tokyo 152-8550 (JP); KISHIDA, Kazuhisa, Tokyo 152-8550 (JP); INOUE, Yasunori, Yokohama-City, Kanagawa 226-8503 (JP); ITO, Munenobu, Yokohama-City, Kanagawa 226-8503 (JP)
(74) Representative: Hoffmann Eitle
(86) International application number: PCT/JP2019/003887
(87) International publication number: WO 2019/156029

(57) **Abstract**

The present invention relates to a complex including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more. A catalyst of the present invention contains the complex of the present invention. A method for producing ammonia of the present invention includes a step of producing ammonia by bringing a gas containing nitrogen and hydrogen into contact with the catalyst of the present invention. In accordance with the present invention, a complex from which a catalyst having high catalytic activity can be obtained, a catalyst containing the complex, and a method for producing ammonia using the catalyst can be provided.

## Description

### Technical Field

The present invention relates to a complex, a catalyst containing the complex, and a method for producing ammonia using the catalyst.

### Background Art

Nitrogen fertilizers, such as ammonium sulfate and urea, which are widely used in the agricultural production are produced using ammonia as a main raw material. Accordingly, ammonia is considered to be a very important chemical raw material, and its production method is investigated.

As an ammonia production technology which is most widely adopted, there is exemplified the Haber-Bosch method. The Haber-Bosch method is a method for producing ammonia by using nitrogen and hydrogen as raw materials and bringing them into contact with a catalyst containing iron as a main component at a high temperature and a high pressure.

As a synthesis method other than the Haber-Bosch method, a synthesis method using a metal-supported catalyst in which ruthenium is supported on a carrier of every sort and kind is investigated.

Meanwhile, among calcium aluminosilicates composed of, as constituent components, CaO, Al₂O₃, and SiO₂, there is a substance whose mineral name is called mayenite, and a compound having a crystal structure of the same type as the foregoing substance is called a "mayenite type compound". It is reported that the mayenite type compound has 12CaO·7Al₂O₃ (hereinafter sometimes abbreviated as "C12A7") as a representative composition, and the C12A7 crystal has a unique crystal structure ([Ca₂₄Al₂₈O₆₄]⁴⁺(O²⁻)₂) in which two of 66 oxygen ions existent in a unit cell composed of two molecules are included as a "free oxygen ion" in a space within a cage formed of a crystal skeleton (see NPL 1).

In addition, the free oxygen ion in the mayenite type compound can be replaced by various anions, and in particular, by holding the mayenite type compound in a strong reducing atmosphere at a high temperature, all free oxygen ions can be replaced by electrons. Then, it is reported that this electron-replaced mayenite type compound is a conductive mayenite type compound having favorable electronic transport properties (see NPL 2). The mayenite type compound in which the free oxygen ions are replaced by electrons in this way is occasionally called "C12A7 electride".

Then, it is reported that a catalyst using the C12A7 electride can be used as an ammonia synthesis catalyst (see PTL 1).

Specifically, the foregoing ammonia synthesis catalyst can be produced by heating a mayenite type compound in a reducing atmosphere to prepare a C12A7 electride and supporting ruthenium on this C12A7 electride as a carrier. As compared with the conventional ammonia synthesis catalysts, this catalyst has high ammonia synthesis activity and serves as a high-performance ammonia synthesis catalyst.

### Citation List

### Patent Literature

PTL 1: WO 2012/077658 A

### Non-Patent Literature

NPL 1: H.B. Bartl, T. Scheller and N. Jarhrb, "Mineral Monatch", 1970, 547
NPL 2: S. Matsuishi, Y. Toda, M. Miyakawa, K. Hayashi, T. Kamiya, M. Hirano, I. Tanaka and H. Hosono, "Science", 301, 626-629, (2003)

### Summary of Invention

### Technical Problem

Although the catalyst having the C12A7 electride as a carrier and ruthenium as a supported metal has a high performance, it is desired that the catalytic activity is made higher to realize a higher performance of the catalyst.

Then, an object of the present invention is to provide a complex from which a catalyst having high catalytic activity can be obtained, a catalyst containing the complex, and a method for producing ammonia using the catalyst.

### Solution to Problem

In order to solve the aforementioned problem, the present inventors made extensive and intensive investigations. As a result, it has been found that a catalyst having high catalytic activity can be obtained by using a complex including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more.
[1] A complex including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more.
[2] The complex as set forth in the above [1], wherein the mayenite type compound is 12CaO·7Al₂O₃.
[3] A catalyst containing the complex as set forth in the above [1] or [2].
[4] A method for producing ammonia including a step of producing ammonia by bringing the catalyst set forth in the above [3] into contact with a gas containing nitrogen and hydrogen.
[5] The method for producing ammonia as set forth in the above [4], wherein the step of producing ammonia is to bring the gas containing nitrogen and hydrogen into contact with the catalyst as set forth in the above [3] under a condition at a reaction temperature of 200 to 600°C and a reaction pressure of 0.01 to 20 MPa in terms of an absolute pressure.
[6] The method for producing ammonia as set forth in the above [4], wherein the step of producing ammonia is to bring the gas containing nitrogen and hydrogen into contact with the catalyst as set forth in the above [3] under a condition at a reaction temperature of 250 to 700°C and a reaction pressure of 0.1 to 30 MPa in terms of an absolute pressure.
[7] The method for producing ammonia as set forth in any one of the above [4] to [6], wherein the step of producing ammonia is to bring the gas containing nitrogen and hydrogen into contact with the catalyst under a condition at a molar ratio of hydrogen to nitrogen (H₂/N₂) of 1 to 10.

### Advantageous Effects of Invention

In accordance with the present invention, a complex from which a catalyst having high catalytic activity can be obtained, a catalyst containing the complex, and a method for producing ammonia using the catalyst can be provided.

### Brief Description of Drawings

Fig. 1 is a graph showing a production amount of ammonia when a pressure in an ammonia synthesis reaction in the case of using a catalyst of each of Example 1 and Comparative Example 1 is changed.
Fig. 2 is a graph showing a production amount of ammonia when a molar ratio of hydrogen to nitrogen in an ammonia synthesis reaction in the case of using a catalyst of each of Example 1 and Comparative Example 1 is changed.
Fig. 3 is a TEM image of a catalyst of Example 1.
Fig. 4 is a TEM image of a catalyst of Example 1.
Fig. 5 is a TEM image of a catalyst of Comparative Example 1.
Fig. 6 is a TEM image of a catalyst of Comparative Example 1.
Fig. 7 is a TEM image of a catalyst of Comparative Example 2.
Fig. 8 is a TEM image of a catalyst of Comparative Example 2.
Fig. 9 is a graph showing a particle diameter distribution of an active metal of a catalyst of Example 1.
Fig. 10 is a graph showing a particle diameter distribution of an active metal of a catalyst of Comparative Example 1.
Fig. 11 is a graph showing a particle diameter distribution of an active metal of a catalyst of Comparative Example 2.

### Description of Embodiments

### [Complex]

The complex of the present invention includes a mayenite type compound and an active metal supported on the mayenite type compound.

### <Mayenite Type Compound>

The mayenite type compound refers to a compound having a crystal structure of the same type as mayenite. The mayenite type compound is preferably a calcium aluminosilicate composed of, as constituent components, CaO, Al₂O₃, and SiO₂, and more preferably 12CaO·7Al₂O₃. In addition, from the viewpoint of making the catalytic activity of the complex higher, the mayenite type compound preferably includes calcium or aluminum, and more preferably includes calcium and aluminum.

A crystal of the mayenite type compound is constructed such that cage-shaped structures (cages) share their wall surfaces and are three-dimensionally connected to each other. Anions, such as O²⁻, are usually included within each cage of the mayenite type compound, but those anions can be replaced with conduction electrons by a reduction treatment.

12CaO-7Al₂O₃ which is used as the mayenite type compound in the present invention is sometimes abbreviated simply as "C12A7".

A specific surface area of the mayenite type compound which is used for the complex of the present invention is preferably 5 m²/g or more. By regulating the specific surface area of the mayenite type compound to 5 m²/g or more, sufficient catalytic activity can be obtained. The specific surface area of the mayenite type compound is more preferably 10 m²/g or more, and still more preferably 15 m²/g or more. Although an upper limit thereof is not particularly limited, it is preferably 200 m²/g or less, and more preferably 100 m²/g or less. When the specific surface area of the mayenite type compound falls within the aforementioned range, such is advantageous from the standpoint of handling of the complex or moldability of the complex in the case where the complex is a powder.

Although the shape of the mayenite type compound which is used for the complex of the present invention is not particularly limited, typically, examples thereof include a fine particle shape, a granular shape, a bulk shape, and a molded body shape. The shape of the mayenite type compound is preferably a fine particle shape, a bulk shape, or a molded body shape, more preferably a fine particle shape or a molded body shape, and still more preferably a molded body shape. The molded body shape may be one of a molded body of the mayenite type compound alone or may be one of a molded body of the mayenite type compound and a binder component other than the mayenite type compound. Although the binder component other than the mayenite type compound is not particularly limited, examples thereof include a silica binder, an alumina binder, a titania binder, a magnesia binder, and a zirconia binder. These binders may be used alone or may be used in combination of two or more thereof. Above all, an alumina binder is preferred.

When the shape of the mayenite type compound is a fine particle shape, though its particle diameter is not particularly limited, a primary particle size of the mayenite type compound is typically 5 nm or more, and preferably 10 nm or more, and it is typically 500 nm or less, and preferably 100 nm or less.

When the mayenite type compound is formed as a fine particle, a surface area per mass increases. The pore of the fine particle of the mayenite type compound is not particularly limited, too; however, since the pore of the particle of the mayenite type compound serves as a meso-pore region, the pore size is preferably 2 to 100 nm.

In the case where the shape of the mayenite type compound is a bulk shape, the mayenite type compound is preferably a porous body having a porous structure. This is because in view of the fact that the mayenite type compound has a porous structure, a mayenite type compound having a larger specific surface area is obtained.

The complex of the present invention is a complex including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more. This proportion means a proportion of the number of particles. When the complex is held in an environment at a temperature of 450°C and a pressure of 3 MPa for 10 hours while bringing a gas containing a nitrogen gas and a hydrogen gas at a volume ratio of the nitrogen gas to the hydrogen gas of 1/3 into contact with the complex, in general, the active metal supported on the mayenite type compound causes cohesion, the particle diameter tends to increase, and the catalytic activity is lowered. Furthermore, on the occasion of bringing the mixed gas containing a nitrogen gas and a hydrogen gas at a volume ratio of the nitrogen gas to the hydrogen gas of 1/3 into contact with the complex in an environment at a temperature 450°C and a pressure of 3 MPa, it is preferred to apply a condition under which a flow rate of the nitrogen gas is 15 mL/min, and a flow rate of the hydrogen gas is 45 mL/min. The total of a proportion of the nitrogen gas and a proportion of the hydrogen gas in the mixed gas containing a nitrogen gas and a hydrogen gas is preferably 70 to 100% by volume, more preferably 80 to 100% by volume, still more preferably 90 to 100% by volume, yet still more preferably 95 to 100% by volume, and even yet still more preferably 100% by volume.

### <Active Metal>

In the complex of the present invention, the active metal is supported on the mayenite type compound. Conventionally, there is involved such a problem that when the mayenite type compound having an active metal supported thereon is heated or reduced, the particle diameter of the active metal increases, and the catalytic activity is lowered. In the complex of the present invention, even when the complex is heated or reduced under a fixed condition, the increase of the particle diameter of the active metal supported on the mayenite type compound can be suppressed. Specifically, the complex is one including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more. When the complex is held in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, in general, the active metal supported on the mayenite type compound causes cohesion, the particle diameter tends to increase, and the catalytic activity is lowered. However, in the complex of the present invention, even when the mixed gas is brought into contact with the complex under the foregoing condition, the particle diameter of the active metal is small. Furthermore, on the occasion of bringing the mixed gas containing a nitrogen gas and a hydrogen gas at a volume ratio of the nitrogen gas to the hydrogen gas of 1/3 into contact with the complex in an environment at a temperature of 450°C and a pressure of 3 MPa, it is preferred to apply a condition under which a flow rate of the nitrogen gas is 15 mL/min, and a flow rate of the hydrogen gas is 45 mL/min.

According to this, as compared with catalysts in which the particle diameter of the active metal is liable to increase, the catalytic activity of the complex can be made higher. Although a method for enabling one to suppress the increase of the particle diameter of the active metal supported on the mayenite type compound even under such a condition under which the particle diameter of the active metal increases is not particularly limited, examples thereof include a method of using an alkaline earth metal. In this method, the alkaline earth metal may be included in the mayenite type compound; the alkaline earth metal may be supported on the mayenite type compound; the alkaline earth metal may be supported on the active metal; or the alkaline earth metal and the active metal may form a complex. The alkaline earth metal not only makes the catalytic activity of the complex higher but also has an effect for suppressing hydrogen poisoning. Although the alkaline earth metal is not particularly limited, it is preferably at least one selected from the group consisting of magnesium, calcium, strontium, and barium; the alkaline earth metal is more preferably at least one selected from the group consisting of strontium and barium; and the alkaline earth metal is still more preferably barium. In addition, though the active metal is not particularly limited, examples thereof include ruthenium, cobalt, and iron, and from the standpoint that the catalytic activity of the complex can be made higher, the active metal is preferably ruthenium.

Although the content of the active metal is not particularly limited, it is typically 0.01 parts by mass or more, preferably 0.02 parts by mass or more, more preferably 0.05 parts by mass or more, still more preferably 0.1 parts by mass or more, and especially preferably 1 part by mass or more as expressed in terms of an active metal element based on 100 parts by mass of the mayenite type compound. The content of the active metal is typically 30 parts by mass or less, preferably 20 parts by mass or less, more preferably 15 parts by mass or less, and still more preferably 10 parts by mass or less. When the content of the active metal falls within the aforementioned range, the resulting complex is able to have sufficient active sites, a highly active catalyst is obtained, and a catalyst which is preferred from the standpoint of costs can be obtained.

From the viewpoint of making the catalytic activity high and suppressing the hydrogen poisoning, in the active metal and the alkaline earth metal to be supported on the mayenite type compound, a molar ratio of the alkaline earth metal to the active metal [(number of moles of the alkaline earth metal)/(number of moles of the active metal)] is preferably 0.05 or more, more preferably 0.1 or more, and sill more preferably 0.25 or more, and it is preferably 10 or less, more preferably 5 or less, still more preferably 4 or less, especially preferably 3 or less, and most preferably 2 or less. The molar ratio of the alkaline earth metal to the active metal [(number of moles of the alkaline earth metal)/(number of moles of the active metal)] is preferably 0.05 to 10, more preferably 0.1 to 5, and still more preferably 0.25 to 2.

On the mayenite type compound, only the active metal may be supported, or only the active metal and the alkaline earth metal may be supported. However, a metal element other than the active metal and the alkaline earth metal may be supported together with the active metal and the alkaline earth metal on the mayenite type compound.

The supported metal other than the active metal and the alkaline earth metal is not particularly limited so long as it does not impair the activity of the complex obtained in the present invention. For example, as for the supported metal other than the active metal and the alkaline earth metal, typically, at least one metal of transition metals belonging to the Group 3, the Group 8, the Group 9, and the Group 10 of the periodic table, alkali metals, and rare earth metals can be used.

Although the transition metals belonging to the Group 3, the Group 8, the Group 9, or the Group 10 of the periodic table is not particularly limited, examples thereof include yttrium, iron, and cobalt.

Although the kind of the alkali metal is not particularly limited, examples thereof include lithium, sodium, potassium, cesium, and rubidium.

Although the kind of the rare earth metal is not particularly limited, examples thereof include lanthanum, cerium, praseodymium, neodymium, samarium, gadolinium, and dysprosium.

Of these, only the active metal and the alkaline earth metal may be supported on the mayenite type compound. This is because as compared with the case of supporting three or more kinds of metals on the mayenite type compound, in the case of supporting the active metal and the alkaline earth metal on the mayenite type compound, a change in the catalyst surface composition to be caused due to a reduction condition or the like is suppressed, and the desired catalytic activity is readily obtained.

### [Production Method of Complex]

Although the production method of a complex of the present invention is not limited, it preferably includes a first step of preparing a mayenite type compound; and a second step of supporting an active metal on the mayenite type compound.

### (First Step)

In the first step, a mayenite type compound is prepared. The first step is hereunder described by reference to an example of C12A7 as the mayenite type compound.

Raw materials for producing C12A7 are not particularly limited, and a calcium-containing raw material of every sort and kind (hereinafter referred to as "calcium source") and an aluminum-containing raw material of every sort and kind (hereinafter referred to as "aluminum source") can be appropriately used.

Although the calcium source is not particularly limited, specifically, calcium salts, such as calcium hydroxide, calcium oxide, calcium nitrate, calcium chloride, and calcium acetate; calcium alkoxides, such as calcium ethoxide, calcium propoxide, calcium isopropoxide, calcium butoxide, and calcium isobutoxide; and so on are used.

Although the aluminum source is not particularly limited, specifically, aluminum salts, such as aluminum hydroxide, aluminum oxide, aluminum nitrate, aluminum chloride, and aluminum acetate; aluminum alkoxides, such as aluminum ethoxide, aluminum propoxide, aluminum isopropxide, aluminum butoxide, and aluminum isobutoxide; aluminum acetylacetonate; and so on are used.

The C12A7 may further include an element other than Ca, Al, and oxygen so long as the object of the present invention is not impaired.

Although a method for preparing C12A7 is not particularly limited, typically, a hydrothermal synthesis method, a sol-gel method, a combustion synthesis method, or a coprecipitation method can be adopted. Of these, a hydrothermal synthesis method is preferred from the standpoint that not only it is simple and easy, but also the C12A7 having a high specific surface area can be reproducibly obtained.

### <Hydrothermal Synthesis Method>

Specifically, the hydrothermal synthesis method is a method in which a solvent, such as water and an alcohol, and a raw material for an inorganic oxide are first charged in a pressure-resistant vessel and heated at a temperature of a boiling point of the solvent or higher for several hours to several days, to obtain a precursor of the inorganic oxide, and subsequently, the resulting precursor is further heated to obtain an inorganic oxide.

Although the calcium source which is used for the hydrothermal synthesis method is not particularly limited, typically, calcium hydroxide, calcium oxide, and a calcium salt are used, with calcium hydroxide being preferably used.

Although the aluminum source is not particularly limited, typically, aluminum hydroxide, aluminum oxide, and an aluminum salt are used, with aluminum hydroxide being preferably used.

A mixing ratio of the calcium source and the aluminum source is not particularly limited, it can be appropriately regulated according to a desired composition. Typically, the calcium source and the aluminum source are mixed in a stoichiometric composition of the targeted C12A7.

By charging the aluminum source and the calcium source in a pressure-resistant vessel and then heating them at a temperature of a boiling point of water or higher, Ca₃Al₂(OH)₁₂ that is a hydroxide serving as the precursor of C12A7 can be synthesized.

A heating temperature in the heat-resistant vessel in the hydrothermal synthesis is not particularly limited, and a heating temperature at which Ca₃Al₂(OH)₁₂ of a sufficient yield is obtained can be appropriately selected. The heating temperature is typically 100°C or higher, and preferably 150°C or higher, and it is typically 200°C or lower.

A heating time is not particularly limited, and a heating time for which Ca₃Al₂(OH)₁₂ of a sufficient yield is obtained can be appropriately selected. The heating time is typically 2 hours or more, and preferably 6 hours or more, and it is typically 100 hours or lower.

By heating (calcining) Ca₃Al₂(OH)₁₂ that is the obtained precursor of C12A7, the targeted C12A7 can be obtained.

A condition of heating (calcination) is not particularly limited, it can be appropriately selected within a range where a C12A7 having a large specific area is obtained. Typically, heating is performed in the air.

Although a heating temperature is not particularly limited, the heating is performed typically at 400°C or higher, and preferably at 450°C or higher, and typically at 1,000°C or lower.

### <Sol-Gel Method>

The C12A7 can also be produced by the sol-gel method. The sol-gel method is a method in which an organic compound or an inorganic compound of a metal serving a raw material of the desired metal oxide is hydrolyzed in a solution to form a sol, polycondensation is then advanced to convert the sol into a gel, and this gel is treated at a high temperature to prepare the metal oxide. The production method can be performed in conformity with a known method described in, for example, "J. Phys. D:Appl. Phys.", 41, 035404 (2008).

Specifically, an aluminum source serving as the raw material is dissolved in a solvent, heated, and stirred, and an acid is then added to prepare a hydrolyzed sol. Subsequently, a calcium source is dissolved in a solvent; the pH is regulated as the need arises; the solution is heated and mixed together with the aluminum source-containing sol under stirring, to form a gel; and after filtering the obtained gel, the residue is dehydrated and calcined, to obtain the C12A7.

Although the calcium source which is used for the sol-gel method is not particularly limited, typically, calcium hydroxide, calcium oxide, a calcium salt, and so on are used, with calcium salt being preferred. The calcium salt is preferably calcium nitrate.

Although the aluminum source is not particularly limited, typically, aluminum hydroxide, aluminum oxide, an aluminum alkoxide, and so on are used, with an aluminum alkoxide being preferred.

### <Combustion Synthesis Method>

As for the synthesis method of C12A7, it is possible to perform the production by the combustion synthesis method.

Specifically, the production method can be performed in conformity with a method described in "J. Am. Ceram. Soc.", 81, 2853-2863 (1998). For example, a calcium source and an aluminum source are dissolved in water, and the mixed solution is heated and combusted to obtain an amorphous precursor of the mayenite type compound. This amorphous precursor is further heated and dehydrated to obtain the mayenite type compound.

Although the calcium source and the aluminum source which are used for the combustion synthesis method are not particularly limited, in general, a calcium salt and an aluminum salt are preferred, and calcium nitrate and aluminum nitrate are more preferred.

Specifically, for example, Ca(NO₃)₂·4H₂O and Al(NO₃)₃·9H₂O can be used as the raw materials. Although there is no particular limitation, these raw materials are dissolved in water in a stoichiometric composition. To the solution having the aforementioned raw materials dissolved therein, urea is further added, and this mixed solution is heated and combusted to obtain the amorphous precursor of the mayenite type compound.

Although a heating temperature is not particularly limited, it is typically 500°C or higher.

Although there is no particular limitation, by heating the obtained amorphous precursor typically at 700 to 1,000°C and dehydrating, the mayenite type compound powder C12A7 is obtained.

### <Coprecipitation Method>

The coprecipitation method is a method in which a solution containing two or more kinds of metal ions is used, to simultaneously precipitate plural kinds of sparingly soluble salts of the metals, and is a method for preparing a powder with high homogeneity.

Although the raw materials which are used for the coprecipitation method are not particularly limited, typically, a calcium salt and an aluminum salt are used as the calcium source and the aluminum source, respectively, and nitrates of the respective metals are preferred.

Specifically, an alkali, such as ammonia and sodium hydroxide, is added to an aqueous solution containing calcium nitrate and aluminum nitrate, thereby simultaneously depositing sparingly soluble salts containing calcium hydroxide and aluminum hydroxide, respectively, followed by filtration, drying, and calcination. There can be obtained the C12A7.

### (Second Step)

In the second step, though the active metal is supported, it is preferred to support the active metal and the alkaline earth metal. The order of supporting ruthenium and the alkaline earth metal on the mayenite type compound is not particularly limited. For example, the active metal and the alkaline earth metal may be simultaneously supported on the mayenite type compound. In this case, not only the particle diameter of the active metal particle to be supported on the mayenite type compound can be made small, but also the active metal can be highly dispersed. In addition, after the alkaline earth metal is added to or mixed with the precursor obtained by the hydrothermal synthesis method, by calcining the resulting mixture, the alkaline earth metal can be supported. An average particle diameter of the active metal particle supported on the mayenite type compound is preferably 1 nm or more, more preferably 1.5 nm or more, and still more preferably 2 nm or more, and it is preferably 15 nm or less, more preferably 10 nm or less, and still more preferably 5 nm or less. In addition, after the active metal is supported on the mayenite type compound, the alkaline earth metal may be supported on the mayenite type compound. In this case, the alkaline earth metal can be supported in the vicinity of the active metal, the catalytic activity of the complex can be increased, and when the active metal and the alkaline earth metal come into contact with each other, the catalytic activity of the complex can be made much higher. In addition, as mentioned above, the active metal is not particularly limited, and examples thereof include ruthenium, cobalt, and iron, with ruthenium being preferred.

A ruthenium compound which is used for supporting ruthenium on the mayenite type compound is not particularly limited so long as it is one capable of being converted to metallic ruthenium through a reduction treatment. Examples of the ruthenium compound which is used for supporting ruthenium on the mayenite type compound include a ruthenium salt and a ruthenium complex.

Examples of the ruthenium salt include ruthenium chloride (RuCl₃), ruthenium chloride hydrate (RuCl₃·nH₂O), ruthenium acetate (Ru(CH₃CO₂)ₓ), ruthenium nitrate, ruthenium iodide hydrate (RuI₃·nH₂O), ruthenium nitrosyl nitrate (Ru(NO)(NO₃)₃), ruthenium nitrosyl chloride hydrate (Ru(NO)Cl₃·nH₂O), ruthenium trinitrate (Ru(NO₃)₃), and hexaammineruthenium chloride (Ru(NH₃)₆Cl₃). As the ruthenium salt, ruthenium acetate, ruthenium nitrate, ruthenium nitrosyl nitrate, and ruthenium chloride are preferred from the standpoint of obtaining high catalytic activity without breaking the structure of the mayenite type compound in the second step.

As the ruthenium complex, triruthenium dodecacarbonyl (Ru₃(CO)₁₂), dichlorotetrakis(triphenylphosphine)ruthenium(II) (RuC₁₂(PPh₃)₄), dichlorotris(triphenylphosphine)ruthenium(II) (RuC₁₂(PPh₃)₃), tris(acetylacetonato)ruthenium(III) (Ru(acaC)₃), ruthenocene (Ru(C₅H₅)₂), dichloro(benzene)ruthenium(II) dimer ([RuC₁₂(C₅H₅)]₂), dichloro(mesitylene)ruthenium(II) dimer ([RuC₁₂(mesitylene)]₂), dichloro(p-cymene)ruthenium(II) dimer ([RuC₁₂(p-Cymene)]₂), carbonylchlorohydridotris(triphenylphosphine)ruthenium(II) ([RuHCl(CO)(PPh₃)₃]), tris(dipivaloylmethanato)ruthenium(III) ([Ru(dpm)₃]), and so on can be used.

As the ruthenium complex, triruthenium dodecacarbonyl (Ru₃(CO)₁₂), tris(acetylacetonato)ruthenium(III) (Ru(acac)₃), ruthenocene (Ru(C₅H₅)₂), and so on are preferred from the standpoint that high catalytic activity is obtained.

Among the foregoing ruthenium compounds, the ruthenium compound may also be at least one ruthenium compound selected from the group consisting of ruthenium chloride, tris(acetylacetonato)ruthenium(III), and ruthenium nitrosyl nitrate taking into consideration both safety and production costs in the production of a complex.

The foregoing compounds are readily thermally decomposed. Accordingly, when these compounds are supported on the mayenite type compound and then reduced through a thermal treatment, the active metal can be deposited in a state of metal on the carrier. According to this, the active metal can be supported on the mayenite type compound. In addition, the aforementioned ruthenium compound is readily reduced with a hydrogen gas under heating, and therefore, from this standpoint, the active metal can be produced on the carrier.

Although a method for supporting the active metal on the mayenite type compound is not particularly limited, the active metal can be supported by an impregnation method, a thermal decomposition method, a liquid phase method, a sputtering method, a vapor deposition method, or the like. In the method for supporting the active metal on the mayenite type compound powder, a method in which after supporting the active metal by any one of the aforementioned supporting methods, molding is performed is practically adopted.

Meanwhile, in a method for supporting the active metal on the molded mayenite type compound carrier, an impregnation method or a vapor deposition method is preferred from the standpoint that the active metal can be uniformly dispersed on the carrier, and an impregnation method is more preferred from the standpoint that a uniform active metal particle is readily formed.

Specifically, in the impregnation method, the mayenite type compound is dispersed in a solution containing the active metal compound, and subsequently, a solvent of the solution containing the mayenite type compound and the active metal compound is evaporated and dried to obtain the mayenite type compound having the active metal supported thereon (hereinafter sometimes referred to as "active metal-supported mayenite type compound"). The solvent which is used for the impregnation method preferably contains at least one selected from the group consisting of water, methanol, ethanol, 1-propanol, 2-propanol, butanol, dimethyl sulfoxide, N,N-dimethylformamide, acetonitrile, acetone, methyl isobutyl ketone, methyl ethyl ketone, cyclohexanone, cyclopentanone, tetrahydrofuran, methylene chloride, ethyl acetate, chloroform, diethyl ether, toluene and hexane, and two or more selected from the group can also be used.

Specifically, in the vapor deposition method, the mayenite type compound is physically mixed with the active metal compound, and the mixture is heated in a vacuum atmosphere, whereby the active metal is vapor-deposited on the mayenite type compound following thermal decomposition of the active metal compound, to obtain the active metal-supported mayenite type compound.

As an alkaline earth metal compound which is used for supporting the alkaline earth metal on the mayenite type compound, a compound of at least one alkaline earth metal selected from magnesium, calcium, strontium, and barium is preferred; a compound of at least one alkaline earth metal selected from strontium and barium is more preferred; and a compound of barium is still more preferred from the standpoint that it is a more abundantly existing element.

The alkaline earth metal compound for supporting the alkaline earth metal on the mayenite type compound is not particularly limited so long as it is able to support the alkaline earth metal on the mayenite type compound. Typically, examples thereof include a hydroxide, a carbonate, an oxide, an inorganic salt, such as a nitrate, a carboxylate, such as an acetate and a formate, and an alkoxide, such as an ethoxide, an other organic compound of an alkali earth metal and a metal complex, such as a metal acetylacetonate complex, each containing an alkaline earth metal. Of these, an alkoxide, a metal acetylacetonate complex, and a carboxylate are preferred, and an alkoxide which is easy to undergo the reaction is more preferred.

Examples of the alkoxide which is used for supporting the alkaline earth metal on the mayenite type compound include magnesium methoxide, magnesium ethoxide, magnesium phenoxide, strontium methoxide, strontium ethoxide, strontium phenoxide, barium methoxide, barium ethoxide, and barium phenoxide. The alkoxide is preferably barium ethoxide.

A method for supporting the alkaline earth metal on the mayenite type compound is the same as the already mentioned method for supporting the active metal.

A form of the alkaline earth metal supported on the mayenite type compound may be any of a form of the metal simple substance and a form of other compound, such as a salt thereof, an oxide thereof, and a hydroxide thereof. A preferred form of the alkaline earth metal supported on the mayenite type compound is an oxide. After being supported on the C12A7, typically, the oxide of the alkaline earth metal is supported as an oxide as it is even after the reduction treatment and exists together with the reduced active metal on the surface of the mayenite type compound.

In the second step, by using a metal compound other than the active metal compound and the alkaline earth metal compound, a metal other than the active metal and the alkaline earth metal can be supported on the mayenite type compound. Although the metal compound for supporting the metal other than the active metal and the alkaline earth metal is not particularly limited so long as it does not impair supporting of the active metal and the alkaline earth metal, typically, compounds of transition metals belonging to the Group 3, the Group 8, the Group 9, and the Group 10 of the periodic table, compounds of alkali metals, and compounds of rare earth metals are preferred.

Examples of the compound of a transition metal belonging to the Group 3, the Group 8, the Group 9, or the Group 10 of the periodic table include compounds of yttrium, iron, and cobalt.

Examples of the compound of an alkali metal include compounds of lithium, sodium, potassium, cesium, and rubidium.

Examples of the compound of a rare earth metal include compounds of lanthanum, cerium, praseodymium, neodymium, samarium, gadolinium, and dysprosium.

### (Third Step)

The production method of a complex of the present invention may further include a third step of subjecting the mayenite type compound obtained in the second step to a reduction treatment.

Although a condition of the reduction treatment is not particularly limited so long as the object of the present invention is not impaired, examples thereof include a method in which the reduction treatment is performed in an atmosphere containing a reducing gas; and a method in which a reducing agent, such as NaBH₄, NH₂NH₂, and formalin, is added to a solution containing an active metal source, thereby depositing the active metal on the surface of the mayenite type compound. The reduction treatment is preferably performed in an atmosphere containing a reducing gas. Examples of the reducing gas include hydrogen, ammonia, methanol (vapor), ethanol (vapor), methane, and ethane.

On the occasion of the reduction treatment, a component other than the reducing gas, which does not impair the ammonia synthesis reaction, may coexist in the reaction system. Specifically, on the occasion of the reduction treatment, in addition to the reducing gas such as hydrogen, a gas which does not impair the reaction, such as argon and nitrogen, may be made to coexist, or nitrogen may be made to coexist.

Although a temperature of the reduction treatment is not particularly limited, it is typically 200°C or higher, and preferably 300°C or higher, and it is typically 1,000°C or lower, and preferably 600°C or lower. By performing the reduction treatment within the aforementioned temperature range, the active metal particle can be grown to the aforementioned preferred average particle diameter range.

Although a pressure of the reduction treatment is not particularly limited, it is typically 0.1 MPa or more and 10 MPa or less.

Although a time of the reduction treatment is not particularly limited, in the case of performing the reduction treatment at atmospheric pressure, it is typically 20 hours or more, and preferably 25 hours or more.

In addition, in the case of performing the reduction treatment under a condition of a high reaction pressure, for example, 1 MPa or more, the time of the reduction treatment is preferably 5 hours or more.

It is preferred to perform the reduction treatment in the third step until an average particle diameter of the active metal after the reduction treatment is increased by 15% or more relative to an average particle diameter of the active metal before the reduction treatment. Although an upper limit of the average particle diameter of the active metal after the reduction treatment is not particularly limited, it is typically 200% or less. By performing the reduction treatment, the activity of the catalyst can be further made high. In this case, the average particle diameter of the active metal after the reduction treatment is preferably 1 nm or more, more preferably 1.5 nm or more, and still more preferably 2 nm or more, and it is preferably 15 nm or less, more preferably 10 nm or less, and still more preferably 5 nm or less.

Here, the average particle diameter of the active metal refers to an average particle diameter by a direct observation method with TEM or the like. In the direct observation method, the average particle diameter can be calculated by measuring a longest diameter of each of the active metals actually observed and then performing arithmetical averaging.

The complex of the present invention is a complex including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more. The average particle diameter of the active metal is preferably 1 nm or more, more preferably 1.2 nm or more, and still more preferably 1.5 nm or more, and it is preferably 5 nm or less, more preferably 4.5 nm or less, still more preferably 4 nm or less, especially preferably 3.5 nm or less, and most preferably 3 nm or less. The average particle diameter of the active metal was calculated by the direct observation method using an electron microscope. The average particle diameter of the active metal can be calculated by observing the active metal with an electron microscope, such as TEM (transmission electron microscope) and STEM (scanning transmission electron microscope), at a magnification ranging from 150,000 times to 500,000 times, regulating such that the active metals in the number of 300 or more and less than 350 are photographed, visually measuring a major axis of each of the active metals as the particle diameter, and arithmetically averaging the particle diameters of the respective active metals. The active metal is specified by EDX (energy dispersive X-ray spectrometry), and the average particle diameter is calculated.

Among the active metals, a proportion of the active metal having a particle diameter of 1 nm or more and less than 3 nm is preferably 65% or more, more preferably 70% or more, still more preferably 75% or more, and especially preferably 80% or more. In view of the fact that the catalytic activity can be made much higher, a maximum particle diameter observed by the electron microscope is preferably 12 nm or less, more preferably 10 nm or less, still more preferably 8 nm or less, and especially preferably 6 nm or less. In view of the fact that the catalytic activity can be made much higher, though a minimum particle diameter observed by the electron microscope is not particularly limited, it is preferably 0.1 nm or more, more preferably 0.5 nm or more, and still more preferably 0.8 nm or more. As mentioned above, the particle diameter can be determined by measuring the respective particle diameters by the direct observation method using an electron microscope.

The average particle diameter of the active metal before the reduction treatment and after the reduction treatment is determined on the assumption that all of the active metals existing on the surface to be measured are a metal. However, the active metal existing on the surface to be measured may contain the active metal compound that is an active metal source so long as it does not significantly affect the calculation of the average particle diameter of ruthenium.

In the case where the active metal compound that is an active metal source accounts for the majority, the particle diameter of the active metal cannot be measured, and therefore, the active metal particle diameter is determined through the reaction treatment. The temperature of the reduction treatment is preferably 300°C or higher, and more preferably 430°C or higher, and it is preferably 600°C or lower, and more preferably 450°C or lower.

### [Catalyst]

The catalyst of the present invention contains the complex of the present invention, and especially, it is composed of the complex of the present invention. According to this, a catalyst having high catalytic activity and being suppressed from hydrogen poisoning can be obtained.

The catalyst of the present invention may further contain a component other than the complex of the present invention so long as the object of the present invention is not impaired.

For example, the catalyst of the present invention can include a component serving as a binder component for making it easy to achieve molding of the catalyst.

Examples of the binder include metal oxides, such as SiO₂, Al₂O₃, ZrO₂, TiO₂, La₂O₃, CeO₂, and Nb₂O₅; and carbon materials, such as active carbon, graphite, and SiC.

The catalyst of the present invention may be subjected to a reduction treatment before its use. The reduction treatment of the catalyst of the present invention can be performed by the same method as the reduction treatment of the third step in the aforementioned production method of a complex of the present invention.

The catalyst of the present can also be subjected to the reduction treatment under a condition of the ammonia synthesis.

Although a specific surface area of the catalyst of the present invention is not particularly limited, it is typically 5 m²/g or more, and preferably 10 m²/g or more in terms of a specific surface area on a basis of the BET method, and it is typically 200 m²/g or less, and preferably 100 m²/g or less.

Typically, the specific surface area of the mayenite type compound having the active metal and the alkaline earth metal supported thereon, which is obtained after the reduction treatment, is the same degree as the specific surface area of the mayenite type compound before supporting the active metal and the alkaline earth metal thereon, which is used for producing the same.

The catalyst of the present invention can be appropriately used as a molded body by using a usual molding technology. Specifically, examples of its shape include a granular shape, a spherical shape, a tablet shape, a ring shape, a macaroni-like shape, a four-leaf-like shape, a dice-like shape, and a honeycomb shape. The catalyst can also be used after it is coated on a support.

Molding of the catalyst may be performed during the aforementioned production of the complex. In this case, the molding may be performed at any step of the production method of a complex without limitations, or it may be performed following any one of the steps.

Specifically, following the first step in the production method of a complex, a step of molding the mayenite type compound obtained in the first step may be included.

Following the second step in the production method of a complex, a step of molding the mayenite type compound having the active metal and the alkaline earth metal supported thereon, which is obtained in the second step, may be included.

Following the third step or the reduction treatment of the catalyst in the production method of a complex, a step of molding the catalyst having been subjected to the reduction treatment may be included.

Among these, a method including, following the first step in the production method of a complex, a step of performing molding; or a method including, following the second step in the production method of a complex, a step of performing molding, is preferred from the standpoint that not only the active metal is uniformly dispersed on the mayenite type compound, but also high catalytic activity is obtained.

After molding the mayenite type compound having an active metal supported thereon, the alkaline earth metal can also be supported on the mayenite type compound.

The catalyst of the present invention can be used as an ammonia synthesis catalyst. However, an application of the catalyst of the present invention is not limited to the ammonia synthesis. For example, the catalyst of the present invention is used for hydrogenation of an aliphatic carbonyl compound, hydrogenation of an aromatic ring, hydrogenation of a carboxylic acid, unsaturated alcohol synthesis through hydrogenation of an unsaturated aldehyde, steam reforming of methane, hydrogenation of an alkene or the like, methanation through a reaction of CO or CO₂ and hydrogen, Fischer-Tropsch synthesis reaction, nuclear hydrogenation of a substituted aromatic compound, oxidation of an alcohol into a carbonyl compound, gasification of lignin, and so on.

### [Production Method of Ammonia]

A method for producing ammonia of the present invention includes a step of bringing a gas containing nitrogen and hydrogen into contact with the catalyst of the present invention to produce ammonia. According to this, ammonia can be efficiently produced.

On the occasion of brining a gas containing nitrogen and hydrogen into contact with the catalyst of the present invention, there may be adopted a method in which only hydrogen is first brought into contact the catalyst of the present invention to subject the catalyst to a reduction treatment, and then, the gas containing nitrogen and hydrogen is brought into contact with the catalyst of the present invention. In addition, a mixed gas of hydrogen and nitrogen may also be brought into contact with the catalyst of the present invention from the first. Furthermore, at this time, an unreacted gas recovered from a reactor can be recycled into the reactor and used.

Although the production method of ammonia of the present invention is not particularly limited, on the occasion of bringing the gas containing nitrogen and hydrogen into the aforementioned catalyst, typically, the catalyst is heated to perform the ammonia synthesis.

According to the production method of ammonia of the present invention, ammonia can be produced under a condition at a low temperature and a low pressure.

A reaction temperature thereof is preferably 200 to 600°C, more preferably 250 to 500°C, and still more preferably 300 to 450°C. Since the ammonia synthesis is an exothermic reaction, a low temperature region is advantageous for ammonia production on a chemical equilibrium theory. However, in order to obtain a sufficient ammonia production rate, the aforementioned temperature range is preferred.

From the viewpoint of production costs, in the case of producing ammonia under a condition at a low temperature and a low pressure, a reaction pressure on the occasion of performing the ammonia synthesis reaction in the production method of ammonia of the present invention is preferably 0.01 to 20 MPa, more preferably 0.5 to 10 MPa, and still more preferably 1 to 7 MPa in terms of an absolute pressure. In the case where the active metal is supported on the mayenite type compound, but the alkaline earth metal is not supported on the mayenite type compound, even when the reaction pressure is increased, the efficiency of the ammonia synthesis reaction hardly becomes high.

In this case, a molar ratio of hydrogen to nitrogen to be brought into contact with the catalyst (H₂/N₂) is preferably 0.25 to 15, more preferably 0.5 to 12, and still more preferably 1.0 to 10. Since the catalyst of the present invention hardly generates hydrogen poisoning, the molar ratio of hydrogen to nitrogen can be made higher, as compared with the usual molar ratio of hydrogen to nitrogen in the case of using an active metal. According to this, the efficiency of ammonia synthesis becomes high.

From the viewpoint of obtaining a more favorable ammonia yield, a total moisture content in the mixed gas of nitrogen and hydrogen is typically 100 ppm or less, and preferably 50 ppm or less.

The form of the reaction vessel is not particularly limited, and a reaction vessel which can be generally used for an ammonia synthesis reaction can be used. Specifically, examples of the reaction forms include a batch type reaction form, a closed circulation type reaction form, and a flow type reaction form. Of these, from the viewpoint of practical use, a flow type reaction form is preferred. In addition, any one of a method using one type of a reactor packed with a catalyst, a method using a plurality of reactors connecting to each other, and a method using a reactor having a plurality of reaction layers in the same reactor can be used.

In view of the fact that the ammonia synthesis reaction from a mixed gas of hydrogen and nitrogen is a volumetric shrinkage type exothermic reaction, in order to increase the ammonia yield, a reaction apparatus which is generally used on an industrial scale for the purpose of removing a reaction heat may be used. Specifically, for example, a method in which a plurality of reactors packed with a catalyst are connected to each other in series and intercoolers are installed at an outlet of each reactor to remove the heat, or the like may be used.

As mentioned above, a characteristic feature of the production method of ammonia of the present invention resides in the point that ammonia can be produced under a condition at a low temperature and a low pressure. However, in order to further improve the reaction rate, ammonia may be produced under a condition at a medium temperature and a medium pressure.

In this case, for example, the reaction temperature is preferably 250 to 700°C, more preferably 300 to 600°C, and still more preferably 350 to 550°C.

In addition, in this case, the reaction pressure is preferably 0.1 to 30 MPa, more preferably 1 to 20 MPa, and still more preferably 2 to 10 MPa in terms of an absolute pressure.

### Examples

The present invention is hereunder described in more detail on a basis of Examples.

### (Analysis of Production Amount of Ammonia)

The production amount of ammonia in each of the following Example and Comparative Examples was determined through a gas chromatographic analysis and an ion chromatographic analysis of an ammonia gas produced by adopting an absolute calibration curve method. The analysis condition is as follows.

### [Gas Chromatographic Analysis Condition]

Apparatus: 490 Micro GC, manufactured by Agilent Technologies, Inc.
Column: MO5A 10m B.F., CP-Sill 5CB 8 m, manufactured by Agilent Technologies, Inc.
Column temperature: 80°C

### [Ion Chromatographic Analysis Condition]

Apparatus: HPLC Prominence, manufactured by Shimadzu Corporation
Column: Shim-pack IC-C4, manufactured by Shimadzu Corporation
Length: 150 mm, inner diameter: 4.6 mm
Eluent: A mixed aqueous solution of oxalic acid (3 mM) and 18-crown-6-ether (2.0 mM)
Column temperature: 40°C
Flow rate: 1.0 mL/min

### (Example 1)

### <Synthesis of Mayenite Type Compound>

Calcium hydroxide (Ca(OH)₂, manufactured by Kojundo Chemical Laboratory Co., Ltd., purity: 99.9%, 7.18 g) and aluminum hydroxide (Al(OH)₃, manufactured by Kojundo Chemical Laboratory Co., Ltd., purity: 99.9%, 8.82 g) were weighed and mixed such that a molar ratio of Ca to Al was Ca/Al = 12/14, to obtain a mixed powder. To the mixed powder, distilled water was added such that the amount of the mixed powder was 10% by mass, to prepare a mixed solution having a total mass of 160 g. This mixed solution was then stirred and mixed in a planetary ball mill at normal temperature for 4 hours. The obtained mixed solution was charged in a pressure-resistant closed vessel and heated (hydrothermally treated) at 150°C for 6 hours while stirring.

A precipitate obtained by the aforementioned hydrothermal treatment was separated by means of filtration, dried, and then pulverized, to obtain about 16 g of a precursor powder of a mayenite type compound: Ca₃Al₂(OH)₁₂ and AlOOH. This precursor powder was heated and dehydrated in the air at 600°C for 5 hours, to obtain a powder of the mayenite type compound (hereinafter referred to as HT-C12A7 (12CaO·7Al₂O₃)). This mayenite type compound had a specific surface area as measured by the BET method of 63.5 m²/g and was a mayenite type compound having a large specific surface area.

### <Supporting of Ruthenium Compound and Alkaline Earth Metal Compound on Mayenite Type Compound>

0.157 g of ruthenium nitrosyl nitrate (Ru(NO)(NO₃)₃, manufactured by Alfa Aeser, Model No.: 12175) and 0.227 g of barium diethoxide (Ba(OC₂H₅)₂, manufactured by Wako Pure Chemical Industries, Ltd., purity: 99.5%) were dissolved in 50 mL of ethanol and stirred for about 15 minutes, to prepare a mixed solution. To the obtained mixed solution, 0.814 g of HT-C 12A7 was added and stirred for about 3 minutes. Thereafter, the solvent was removed from the aforementioned mixed solution by using a rotary evaporator, dried, and further dried in a vacuum, to obtain a powder of HT-C12A7 having ruthenium and barium supported thereon (Ru/Ba = 1/2 (molar ratio)) (hereinafter referred to as "Ba-Ru/HT-C12A7").

### (Comparative Example 1)

Using triruthenium dodecacarbonyl (Ru₃(CO)₁₂, manufactured by Sigma-Aldrich Co., Inc., purity: 99%, 0.101 g) as a Ru raw material, this was mixed with HT-C12A7 (0.95 g) obtained by the method of Example 1, the mixture was sealed in a Pyrex (registered trademark) glass tube and heated in the following temperature program, to obtain a powder having 5% by mass of Ru supported on HT-C12A7 (hereinafter referred to as "Ru/HT-C12A7").

### [Temperature Program]

(1) The temperature was raised from 20°C to 40°C for 20 minutes, followed by heating at 40°C for 60 minutes.
(2) Immediately after (1), the temperature was raised from 40°C to 70°C for 120 minutes, followed by heating at 70°C for 60 minutes.
(3) Immediately after (2), the temperature was raised from 70°C to 120°C for 120 minutes, followed by heating at 120°C for 60 minutes.
(4) Immediately after (3), the temperature was raised from 120°C to 250°C for 150 minutes, followed by heating at 250°C for 120 minutes.

### (Comparative Example 2)

A powder of HT-C12A7 having ruthenium supported thereon (hereinafter referred to as "Ru/HT-C12A7") was obtained by the same method as in Example 1, except that barium was not supported on HT-C12A7.

Each of the catalysts prepared in Example 1 and Comparative Examples 1 and 2 was heated from a temperature of 20°C to a temperature of 450°C at a temperature rise rate of 10°C/min and held in an environment at a temperature of 450°C and a pressure of 3 MPa for 10 hours while bringing a mixed gas composed of a nitrogen gas and a hydrogen gas having a volume ratio of the nitrogen gas to the hydrogen gas of 1/3 (nitrogen gas: 15 mL/min, hydrogen gas: 45 mL/min) into contact with the catalyst, followed by measuring an average particle diameter and particle diameter of the active metal. 0.3 g of each of the catalysts prepared in Example 1 and Comparative Examples 1 and 2 was diluted with 1.2 g of a quartz sand and packed in a SUS reaction tube; the top and bottom of the catalyst layer were sandwiched by a quartz wool; and 55 g of an alumina ball having a diameter of 1 to 2 mm was packed in an upper part of the SUS reaction tube having the catalyst layer packed therein. This SUS reaction tube having the catalyst layer packed therein was installed in a fixed-bed flow type reaction apparatus, and the evaluation was performed.

### <Particle Diameter and Average Particle Diameter of Active Metal>

The particle diameter and the average particle diameter of the active metals were calculated by the direct observation method by using an electron microscope (apparatus: JEM ARM-200F and JEM-2010F, manufactured by JEOL Ltd., accelerating voltage: 200 kV). The active metals were observed within a range at a magnification ranging from 150,000 times to 500,000 times with the electron microscope and regulated such that the active metals in the number of 300 or more and less than 350 were photographed; a major axis of each of the active metals as the particle diameter was visually measured; and the particle diameters of the respective active metals were arithmetically averaged, thereby calculating the average particle diameter. The active metal was specified by EDX (energy dispersive X-ray spectrometry), and the average particle diameter was calculated.

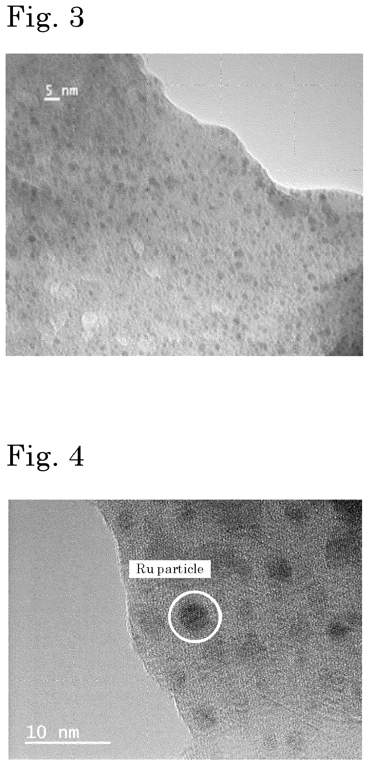

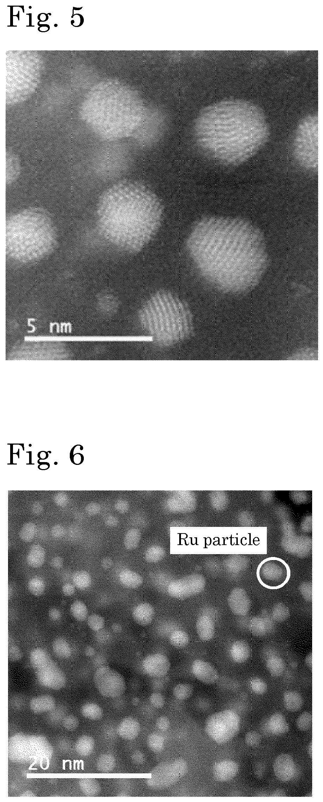

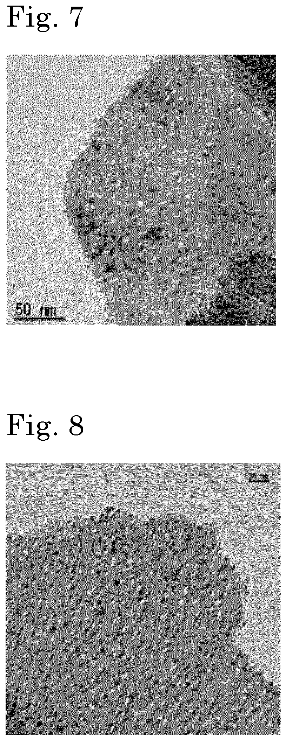

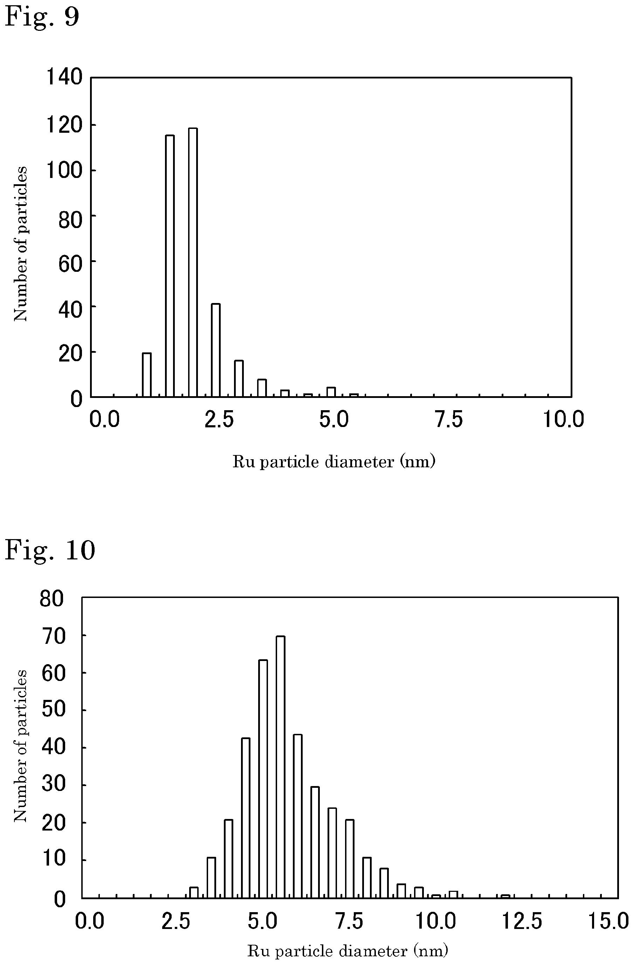

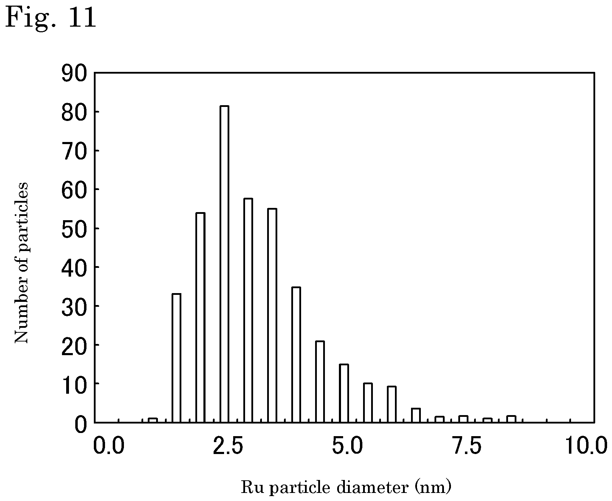

An example of a TEM image of the catalyst of Example 1 photographed with an electron microscope is shown in Figs. 3 and 4; an example of a TEM image of the catalyst of Comparative Example 1 photographed with an electron microscope is shown in Figs. 5 and 6; and an example of a TEM image of the catalyst of Comparative Example 2 photographed with an electron microscope is shown in Figs. 7 and 8. In addition, a particle diameter distribution of ruthenium of the catalyst of Example 1 as measured by using an electron microscope is shown in Fig. 9; a particle diameter distribution of ruthenium of the catalyst of Comparative Example 1 is shown in Fig. 10; and a particle diameter distribution of ruthenium of the catalyst of Comparative Example 2 is shown in Fig. 11. The average particle diameter of ruthenium and a proportion of ruthenium particles of 1 nm or more and less than 3 nm as calculated on a basis of these particle diameter distributions are shown in the following Table 1.

**Table 1**

| | Supported metal | Ru raw material | Average particle diameter of ruthenium (nm) | Proportion of ruthenium particles of 1 nm or more and less than 3 nm (%) |
|---|---|---|---|---|
| Example 1 | Ru | Ru(NO)(NO₃)₃ | 1.7 | 90 |
| Comparative Example 1 | Ru | Ru₃(CO)₁₂ | 5.5 | 0 |
| Comparative Example 2 | Ru | Ru(NO)(NO₃)₃ | 2.9 | 59 |

From the foregoing results, it was noted that the complex used as the catalyst of Example 1 is a complex wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, the average particle diameter of the active metal is less than 5.5 nm, and the proportion of the active metal having a particle diameter of 1 nm or more and less than 3 nm is 60% or more.

### <Pressure Dependence of Ammonia Synthesis Reaction>

Using each of the catalysts prepared in Example 1 and Comparative Example 1, a reaction for producing an ammonium gas (NH₃) by allowing a nitrogen gas (N₂) and a hydrogen gas (H₂) to react with each other was performed by changing a reaction pressure while fixedly holding a reaction temperature (400°C).

0.3 g of each of the above-obtained catalysts was diluted with 1.2 g of a quartz sand and packed in a SUS reaction tube, and the top and bottom of the catalyst layer were sandwiched by a quartz wool. Furthermore, 55 g of an alumina ball having a diameter of 1 to 2 mm was packed in an upper part of the SUS reaction tube having the catalyst layer packed therein. This SUS reaction tube having the catalyst layer packed therein was installed in a fixed-bed flow type reaction apparatus, and the reaction was performed.

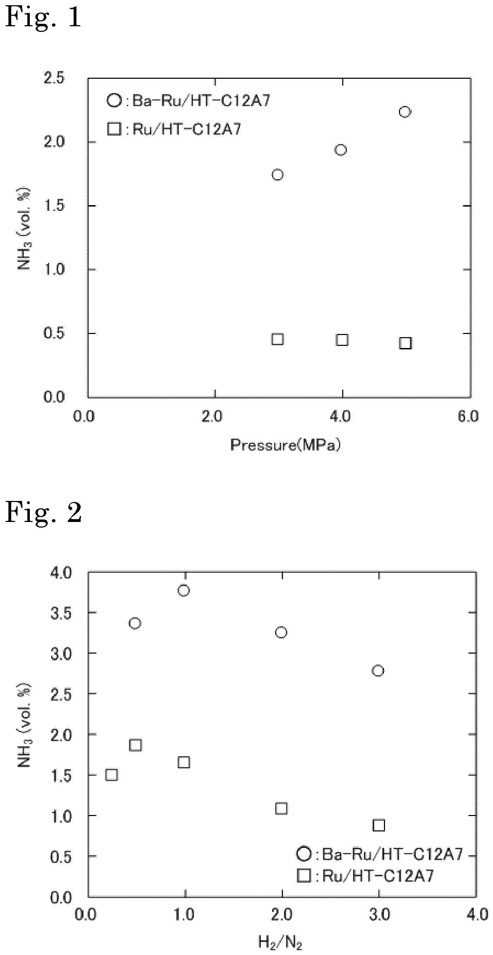

A mixed gas of N₂ and H₂ gases having a molar ratio (H₂/N₂) of 3 was fed into a reactor under a condition at a spatial velocity (WHSV) of the gas of a total of N₂ and H₂ of 36,000 mL g⁻¹h⁻¹, to undergo the reaction. A gas come out from the aforementioned reactor was quantitatively determined for NH₃ using an online gas chromatograph. Also, the gas come out from the reactor was subjected to bubbling in a 0.01 M sulfuric acid aqueous solution; ammonia produced was dissolved in the solution; and an ammonium ion produced was quantitatively determined using an ion chromatograph, thereby measuring a concentration of ammonia in the gas discharged from the reactor. The results are shown in Figure 1.

As shown in Fig. 1, the production amount of ammonia when the catalyst of Example 1, in which metallic ruthenium and the alkaline earth metal were supported on the mayenite type compound was used, was large as compared with that when the catalyst of Comparative Example 1, in which only metallic ruthenium was supported on the mayenite type compound was used.

In addition, as shown in Fig. 1, according to the catalyst of Comparative Example 1, in which only metallic ruthenium was supported on the mayenite type compound, even when the reaction pressure was made high, the production amount of ammonia could not be increased. However, according to the catalyst of Example 1, in which metallic ruthenium and the alkaline earth metal were supported on the mayenite type compound, by making the reaction pressure high, the production amount of ammonia could be increased.

According to this, it was noted that when not only metallic ruthenium is supported on the mayenite type compound, but also the alkaline earth metal is supported on the mayenite type compound, the catalytic activity can be made high, and by making the reaction pressure high, it becomes possible to more improve the catalytic reaction.

### <Ratio Dependence of Hydrogen to Nitrogen on Ammonia Synthesis Reaction>

Using each of the catalysts prepared in Example 1 and Comparative Example 1, a reaction for producing an ammonium gas (NH₃) by allowing a nitrogen gas (N₂) and a hydrogen gas (H₂) to react with each other was performed by changing a molar ratio of the hydrogen gas (H₂) to the nitrogen gas (N₂) (H₂/N₂) while fixedly holding a reaction temperature (400°C) and a reaction pressure (3.0 MPa).

0.3 g of each of the above-obtained catalysts was diluted with 1.2 g of a quartz sand and packed in a SUS reaction tube, and the top and bottom of the catalyst layer were sandwiched by a quartz wool. Furthermore, 55 g of an alumina ball having a diameter of 1 to 2 mm was packed in an upper part of the SUS reaction tube having the catalyst layer packed therein. This SUS reaction tube having the catalyst layer packed therein was installed in a fixed-bed flow type reaction apparatus, and the reaction was performed.

A mixed gas of N₂ and H₂ was fed into a reactor under a condition at a spatial velocity (WHSV) of the gas of a total of N₂ and H₂ of 18,000 mL g⁻¹h⁻¹, to undergo the reaction. A gas come out from the aforementioned reactor was quantitatively determined using an online gas chromatograph. Furthermore, the reaction gas on the outlet side was subjected to bubbling in a 0.01 M sulfuric acid aqueous solution; ammonia produced was dissolved in the solution; and an ammonium ion produced was quantitatively determined using an ion chromatograph, thereby measuring a concentration of ammonia in the gas discharged from the reactor. The results are shown in Figure 2.

As shown in Fig. 2, the production amount of ammonia when the catalyst of Example 1, in which metallic ruthenium and the alkaline earth metal were supported on the mayenite type compound was used, was large as compared with that when the catalyst of Comparative Example 1, in which only metallic ruthenium was supported on the mayenite type compound was used.

In addition, as shown in Fig. 2, when not only metallic ruthenium is supported on the mayenite type compound, but also the alkaline earth metal is supported on the mayenite type compound, the molar ratio of hydrogen to nitrogen (H₂/N₂) which is optimum for production of ammonia can be shifted to a high hydrogen side.

According to this, it was noted that when not only metallic ruthenium is supported on the mayenite type compound, but also the alkaline earth metal is supported on the mayenite type compound, the catalytic activity can be made high, and furthermore, hydrogen poisoning of the catalyst can be suppressed.

It was confirmed that even when the barium diethoxide in Example 1 is changed to barium nitrate and ruthenium nitrosyl nitrate, the catalytic activity can be made high, and the hydrogen poisoning of the catalyst can be suppressed.

From the results of these Example and Comparative Examples, it was noted that by using, as the catalyst, a complex including a mayenite type compound and an active metal supported on the mayenite type compound, wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more, a catalyst having high catalytic activity is obtained.

On the other hand, it was noted that in the case of performing the aforementioned treatment, even when a complex in which an average particle diameter of the active metal is 5.5 nm or more, or a proportion of the active metal having a particle diameter of 1 nm or more and less than 3 nm is less than 60% is used as the catalyst, a catalyst having high catalytic activity is not obtained.

## Claims

1. A complex comprising mayenite type compound and an active metal supported on the mayenite type compound,
wherein after heating the complex from a temperature of 20°C to a temperature of 450°C at a temperature rise rate of 10°C/min and then holding in an environment at a temperature of 450°C and a pressure of 3 MPa for 10 hours while bringing a mixed gas containing a nitrogen gas and a hydrogen gas at a volume ratio of the nitrogen gas to the hydrogen gas of 1/3 into contact with the complex, an average particle diameter of the active metal is less than 5.5 nm, and in the active metal, a proportion of an active metal having a particle diameter of 1 nm or more and less than 3 nm is 60% or more.

2. The complex according to claim 1, wherein the mayenite type compound is 12CaO·7Al₂O₃.

3. A catalyst comprising the complex according to claim 1 or 2.

4. A method for producing ammonia comprising a step of producing ammonia by bringing a gas containing nitrogen and hydrogen into contact with the catalyst according to claim 3.

5. The method for producing ammonia according to claim 4, wherein the step of producing ammonia is to bring the gas containing nitrogen and hydrogen into contact with the catalyst according to claim 3 under a condition at a reaction temperature of 200 to 600°C and a reaction pressure of 0.01 to 20 MPa in terms of an absolute pressure.

6. The method for producing ammonia according to claim 4, wherein the step of producing ammonia is to bring the gas containing nitrogen and hydrogen into contact with the catalyst according to claim 3 under a condition at a reaction temperature of 250 to 700°C and a reaction pressure of 0.1 to 30 MPa in terms of an absolute pressure.

7. The method for producing ammonia according to any one of claims 4 to 6, wherein the step of producing ammonia is to bring the gas containing nitrogen and hydrogen into contact with the catalyst under a condition at a molar ratio of hydrogen to nitrogen (H₂/N₂) of 1 to 10.
